# EUROPÄISCHE PATENTSCHRIFT

(11) **EP 2 256 070 B1**
(45) Veröffentlichungstag und Bekanntmachung des Hinweises auf die Patenterteilung: **20.06.2018**
(21) Anmeldenummer: 10160045.0
(22) Anmeldetag: 15.04.2010
(51) Int. Cl.: B65G 21/20, B65G 17/40, B65G 21/22

(54) **Bandfördereinrichtung**
Conveyer belt device
Dispositif de convoyeur de bande

(30) Priorität: 29.05.2009 DE 102009023287
(43) Veröffentlichungstag der Anmeldung: 01.12.2010
(73) Patentinhaber: Krones AG, 93073 Neutraubling (DE)
(72) Erfinder: Seger, Martin, 92318, Neumarkt i. d. Opf. (DE); Hüttner, Johann, 84066, Mallersdorf-Pfaffenberg (DE)
(74) Vertreter: Grünecker Patent- und Rechtsanwälte PartG mbB

(56) Entgegenhaltungen:
- EP-A2- 1 477 437
- WO-A1-92/11191
- WO-A1-2004/009476
- DE-A1- 1 781 252
- DE-A1- 2 822 196
- DE-A1- 3 930 626
- DE-A1- 19 840 394
- DE-A1-102006 053 913
- DE-U- 6 805 900
- DE-U1- 8 714 840
- FR-A1- 2 280 566
- GB-A- 2 163 718
- US-A- 2 833 390
- US-A1- 2003 019 721

## Beschreibung

Die Erfindung bezieht sich auf eine Bandfördereinrichtung der im Oberbegriff von Anspruch 1 erläuterten Art.

Bei den bislang bekannten Bandförderern gleitet das Transportband auf einer als Laufträger ausgebildeten Laufschiene. Die Laufschiene ist eine glatte Platte aus beispielsweise Edelstahl, die gegebenenfalls mit einer auswechselbaren Verschleißschicht aus Kunststoff belegt ist. Trotzdem ist nicht zu vermeiden, dass durch die notwendigerweise auftretende Gleitreibung eine thermische Belastung des Bandkörpers bzw. des Transportbandes auftritt, die einerseits zum schnelleren Verschleiß dieser Teile beiträgt und andererseits einen wesentlichen Anteil der Antriebsenergie schluckt.

Es sind bereits Rollenförderer bekannt, bei denen die zu fördernden Güter nicht auf einem Band, sondern direkt auf den angetriebenen Rollen laufen. Die Laufruhe dieser Rollenförderer ist jedoch sehr gering. Außerdem sind diese Rollenförderer nur für abmessungsmäßig größere Gegenstände einsetzbar.

Aus der WO 03/101865 ist weiterhin ein Transportband bekannt, das in Form einer Gliederkette aus einer Vielzahl von Gliedern zusammengesetzt ist, wobei jedes dieser Glieder eine Mehrzahl von Rollen aufweist, die in Laufrichtung hintereinander und in quer zur Laufrichtung beabstandeten Reihen angeordnet sind. Die Glieder der Gliederkette sind über Gelenke miteinander verbunden. Die Rollen laufen wiederum auf ebenen Platten, so dass ein seitliches Abdriften und die damit verbundene Gleitreibung auftreten kann.

Die DE 10 2006 053 913 A1 offenbart einen gattungsgemäßen Bandförderer. Der Erfindung liegt die Aufgabe zugrunde, einen energiesparenden Bandförderer bereitzustellen, der konstruktiv wenig aufwendig und transportsicher ist.

Die Aufgabe wird durch einen Bandförderer nach Anspruch 1 gelöst.

Vorteilhafte Weiterbildungen der Erfindung sind den Unteransprüchen zu entnehmen.

Durch die Lagerung der Rollen am Laufträger müssen Rollen nur dort vorgesehen sein, wo tatsächlich eine Unterstützung des Transportbandes notwendig ist, d.h. am Fördertrum, während die Rückführung des umlaufenden Transportbandes keine Rollen erfordert. Außerdem können durch die erfindungsgemäße Ausgestaltung der Rollenabstand und der Rollendurchmesser optimal an das Transportband und die transportierenden Güter angepasst werden, so dass sowohl die Laufruhe des Bandes als auch die Laufruhe der Transportgüter verbessert werden kann.

So kann beispielsweise der Rollenabstand so bemessen werden, dass bei Verwendung einer Gliederbandkette als Transportband jedes Glied einer Gliederkette auf wenigstens zwei Rollen aufliegt.

Falls die durch die Gleitreibung bessere Fixierung der einzelnen Gliederketten und ihrer Zwischenräume erforderlich ist, wird erfindungsgemäß an der Übergabestelle zwischen zwei Förderern von den Rollen auf die bekannte Laufschiene übergegangen. Die Laufschiene sollte bevorzugt mit einer Verschleißleiste versehen sein.

Wird ein Förderer, zumindest bereichsweise, mit zwei nebeneinander laufenden Transportbändern versehen, so können diese vollständig auf ihren eigenen Laufträgern ruhen oder mit ihren einander zugewandten, inneren Rändern auf gemeinsamen Rollen laufen.

Bevorzugt erstrecken, sich die Rollen nicht über die gesamte Breite des Transportbandes, sondern es sind zwei im Abstand zueinander angeordnete Rollenführungen vorgesehen.

Bevorzugt sind die Rollen so eng zueinander benachbart angeordnet, wie dies ohne gegenseitige Berührung möglich ist.

Es ist jedoch auch möglich, die Rollen am Transportband zu lagern und für die Führung der Rollen eine Bandführung zu verwenden. Auch hier wird der Vorteil des Ersatzes einer Gleitreibung durch Rollreibung erreicht, wobei durch die Bandführung ein seitliches Abtriften und somit ein Gleitreibungsanteil, vermieden wird.

Bevorzugt enthält die Bandführung einen zwischen benachbarten Reihen von Rollen vorgesehenen und in eine gegenüberliegende Führungsausnehmung eingreifenden Führungsvorsprung.

Durch die Anordnung von wenigstens zwei Rollen an jedem Glied einer Gliederbandkette wird die Laufruhe wesentlich verbessert.

Die erfindungsgemäße Ausgestaltung eignet sich besonders dort, wo eine erhöhte Laufruhe und die damit verbundene Standfestigkeit der zu fördernden Güter, in Verbindung mit einer geringen thermischen Belastung erwünscht ist. Dies ist insbesondere beim Transport von Behältern, insbesondere von Getränkebehältern, leer oder befüllt, und beim Transport von Gebinden aus diesen Behältern der Fall.

Ausführungsbeispiele der Erfindung werden nachfolgend anhand der Zeichnungen näher erläutert. Es zeigen:
- Fig. 1: ein Beispiel eines Teils eines Bandförderers mit einer nicht erfindungsgemäßen Übergabestelle als perspektivische Darstellung,
- Fig. 2: die Seitenansicht des Bandförderers gemäß Fig. 1 in vergrößerter Darstellung,
- Fig. 3: den Schnitt III-II aus Fig. 1,

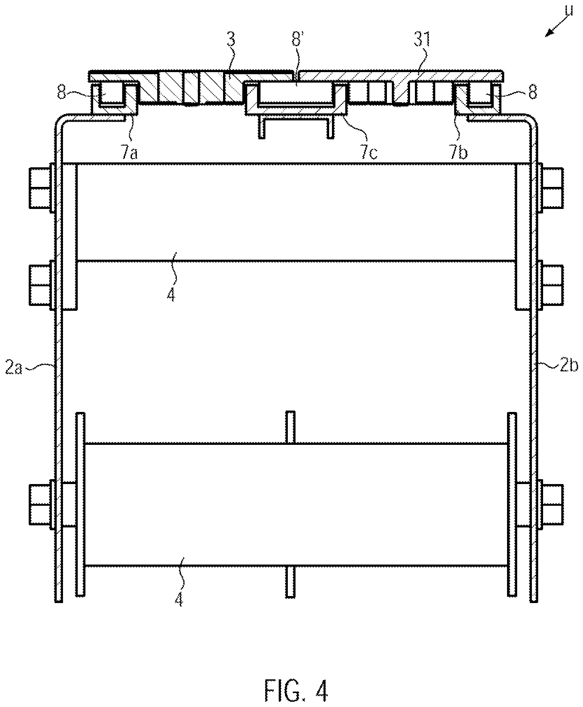

- Fig. 4: ein nicht unter die Erfindung fallendes Beispiel gemäß Fig. 3,
- Fig. 5: ein Ausführungsbeispiel eines erfindungsgemäßen Bandförderers, und
- Fig. 6: ein nicht unter die Erfindung fallendes Beispiel eines Bandförderers.

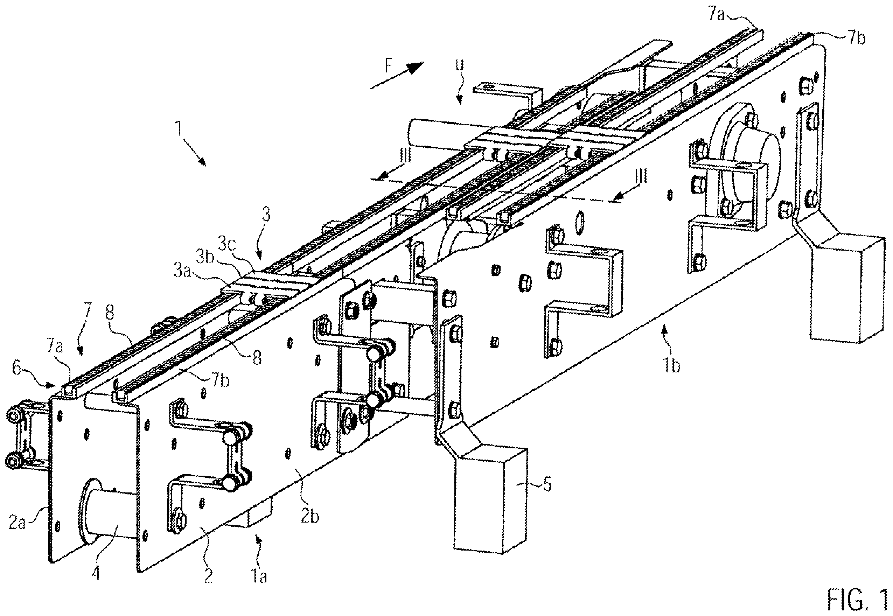

Fig. 1 zeigt in schematisierter, perspektivischer Darstellung einen Ausschnitt aus einem Fördertrum eines Beispiels eines Bandförderers 1, der sich besonders zum Transport von Behältern, insbesondere Getränkebehältern, befüllt oder leer, und von Gebinden, beispielsweise von Getränkebehältern, eignet, Der Bandförderer 1 enthält einen Bandkörper 2, der die notwendige Unterstützung eines Transportbandes 3 gewährleistet. Das Transportband 3 ist als Gliederbandkette ausgebildet und nur in Form einzelner über Gelenke 3' miteinander verbundener Glieder 3a, 3b, 3c dargestellt. Der Bandkörper 2 enthält zwei einander gegenüberliegende seitliche Wangen 2a und 2c, die über geeignete Verbindungen 4 miteinander verbunden und auf Abstand zueinander gehalten werden. Über Stützen 5 stützt sich der Bandkörper 2 auf dem Untergrund ab.

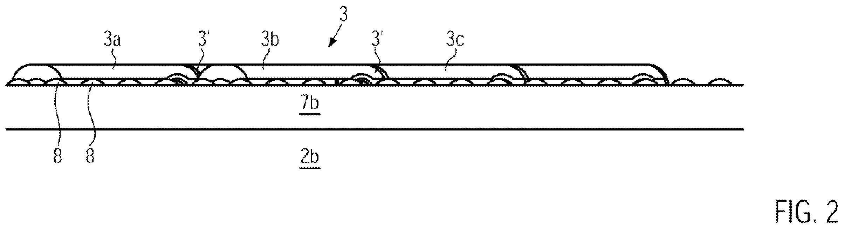

Der Bandkörper 2 ist an seinem oberen Ende mit einem Laufträger 6 versehen, auf dem sich das Transportband 3 auf einer Rollenführung 7 abstützt. Die Rollenführung 7 enthält im dargestellten Ausführungsbeispiel zwei Rollengehäuse 7a und 7b, die sich über die gesamte Länge in Förderrichtung F des Bandkörpers 2 erstrecken. Als Rollengehäuse soll jede Konstruktion verstanden werden, die in der Lage ist, Rollen 8 um eine quer zur Förderrichtung verlaufende Achse drehend zu lagern und gegen seitliches (d. h. quer zur Förderrichtung) Abdriften zu sichern, wobei im dargestellten Ausführungsbeispiel in jedem Rollengehäuse 7a, 7b eine Mehrzahl einzelner Rollen 8 drehbar gelagert sind. Die Rollengehäuse 7a, 7b sind mit einem U-förmigen Querschnitt ausgebildet und mit ihren Öffnungen nach oben weisend angeordnet und enthalten jeweils eine Reihe einzelner Rollen 8 (bevorzugt aus Kunststoff), die im dargestellten Ausführungsbeispiel so eng zueinander benachbart sind (siehe auch Fig. 2) wie dies möglich, ohne dass sich die Rollen 8 gegenseitig berühren. Darüber hinaus sollte auch der Rollendurchmesser und der Rollenabstand so bemessen sein, dass jedes Glied 3a, 3b, 3c, usw. auf wenigstens zwei Rollen ruht. Im dargestellten Ausführungsbeispiel ruht jedes Glied 3a, 3b, 3c mit jeden seiner seitlichen, freien Ränder auf jeweils fünf bis sechs Rollen 8. Dabei liegen die seitlichen freien Ränder der Glieder 3a, 3b, 3c, usw. direkt auf den Rollen 8, d.h. ohne Zwischenlage eines Verschleißstreifens oder dgl. auf.

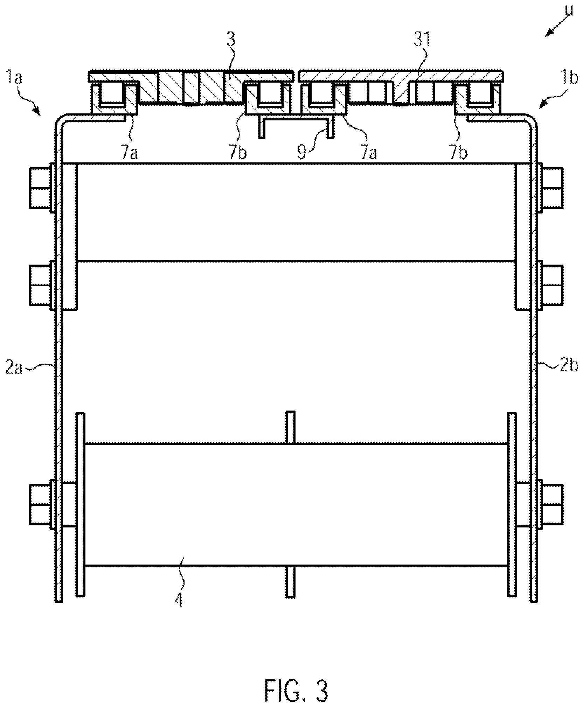

In Fig. 1 ist der Bandförderer 1 an einer nicht erfindungsgemäßen Übergabestelle U gezeigt, an der die in Förderrichtung F auf einer ersten Bandfördereinheit 1a ankommenden Gegenstände auf eine zweite Bandfördereinheit 1b übergeben werden. Im dargestellten Ausführungsbeispiel sind beide Bandfördereinheiten 1a, 1b identisch ausgebildet, parallel nebeneinander angeordnet und einschließlich der Übergabestelle U mit den Rollen 8 versehen. An der Übergabestelle U überlappen sich die beiden Bandfördereinheiten 1a, 1b in Förderrichtung F, so dass im Bereich der Übergabestelle U die Rollen 8 des Rollengehäuses 7b der Bandfördereinheit 1a direkt neben den Rollen 8 des Rollengehäuses 7a laufen, wie dies in der Schnittdarstellung gemäß Fig. 3 näher dargestellt ist.

Auf der Bandfördereinheit 1a läuft ein erstes Transportband 3 und auf der zweiten Bandfördereinheit 1b ein zweites Transportband 31 um. Die beiden Transportbänder 3, 31 sind identisch als Gliederkettenbänder ausgebildet. Im Bereich der Übergabestelle U ist jedoch die Wange 2b der Bandfördereinheit 1a und die Wange 2a der Bandfördereinheit 1b durch eine Unterstützungsschiene 9 ersetzt, auf der die beiden benachbarten Rollengehäuse 7b, 7a angeordnet sind. Im Bereich der Übergabestelle U übernehmen die Träger 4 die Verbindung der Wange 2a der ersten Bandfördereinheit 1a mit der Wange 2b der zweiten Bandfördereinheit 2b.

Im Bereich der Übergabestelle U oder an anderen Stellen, wo die Förderaufgabe durch zwei nebeneinander liegende Transportbänder 3, 31 erfüllt werden soll, ist es jedoch auch möglich, die beiden einander zugewandten, inneren Ränder der nebeneinander liegenden Transportbänder 3, 31 auf gemeinsamen Rollen 8' abzustützen. Die gemeinsamen Rollen 8' sind jedoch, analog den Rollen 8, in einem Rollengehäuse 7c mit U-förmigem Querschnitt drehbar gelagert, wobei der Durchmesser und der Abstand der Rollen 8' analog den Rollen 8 ausgebildet ist.

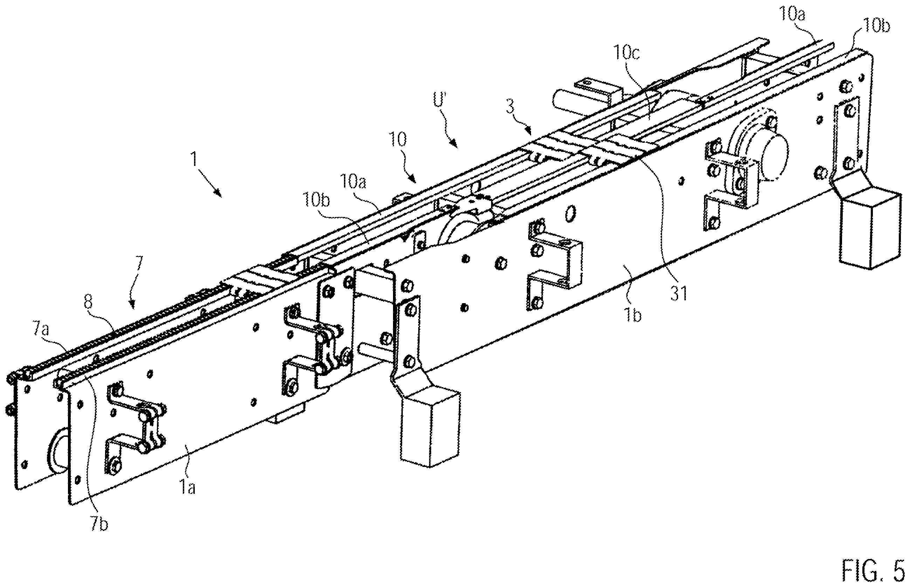

Wie die erfindungsgemäße Ausführungsform in Fig. 5 zeigt, kann jedoch die Übergabestelle U' zwischen einer ersten Bandfördereinheit 1a und einer zweiten Bandfördereinheit 1b des Bandförderers 1 auch über die herkömmlichen, für eine Gleitreibung ausgebildeten Gleitschienen 10 erfolgen, die im Bereich der Übergabestelle U' die Rollen ersetzen und gegebenenfalls mit den üblichen Verschleißleisten versehen sind. Analog zum ersten Ausführungsbeispiel enthält auch hier jede Bandfördereinheit 1a, 1b zwei Rollengehäuse 7a, 7b, in deren U-förmigem Querschnitt die Rollen 8 so gelagert sind, dass sie aus dem Querschnitt nach oben überstehen. Die Stärke und Anordnung der Gleitschienen 10 sollte auf den Überstand der Rollen 8 so abgestimmt werden, dass ein ruckfreier Übergang zwischen den Rollen und den Gleitschienen 10 möglich ist. Die Gleitschienen 10 erstrecken sich ein Stück weit vor und nach der Übergabestelle U', wobei hier für jedes Rollengehäuse 7a, 7b eine eigene Gleitschiene 10a, 10b vorgesehen ist. Im Bereich der Übergabestelle U' sind die aneinander anliegenden Gleitschienen 10b der Bandfördereinheit 1a und 10a der Bandfördereinheit 1b durch eine gemeinsame Gleitschiene 10c ersetzt, auf der die inneren, einander zugewandten, freien Ränder der beiden benachbarten Transportbänder 3, 31 ruhen.

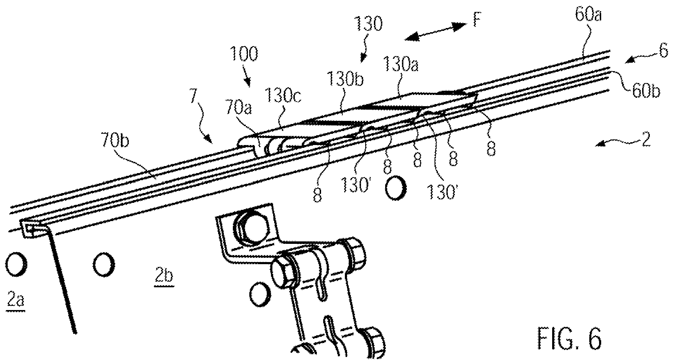

Fig. 6 zeigt ein nicht unter die Erfindung fallendes Beispiel eines Bandförderers 100, der sich vom Ausführungsbeispiel gemäß den vorangegangenen Figuren durch eine abgewandelte Rollenführung 7 unterscheidet. Gleiche bzw. vergleichbare Bauteile sind mit den gleichen Bezugszeichen gekennzeichnet und werden nicht nochmals erläutert. So enthält der Bandförderer 100 einen Bandkörper 2 mit gegenüberliegenden Wangen 2a, 2b, die an ihrem oberen Ende mit dem Laufträger 6 versehen sind. Der Laufträger 6 enthält im dargestellten Ausführungsbeispiel zwei parallel und im Abstand horizontal nebeneinanderliegende Laufschienen 60a und 60b, die als ebene, gerade, streifenförmige Platten ausgebildet sind, die sich in Förderrichtung F erstrecken. Auf den Laufschienen 60a, 60b laufen Rollen 8, die an einem Transportband 130 drehbar gelagert sind. Die Rollen 8 sind an den einzelnen Gliedern (dargestellt sind nur drei Glieder 130a, 130b, 130c, die über Gelenke 130' miteinander verbunden sind) um eine quer zur Förderrichtung F verlaufende Achse drehbar gelagert und stehen in Richtung auf die Laufschienen 60a, 60b nach unten vor. Im dargestellten Ausführungsbeispiel sind für jede der Laufschienen 60a, 60b an der Gliederkette 130 jeweils eine sich in Förderrichtung F erstreckende Reihe von Rollen 8 vorgesehen, wobei jedes der Glieder 130a, 130b, 130c bevorzugt wenigstens zwei in Förderrichtung F hintereinanderliegende Rollen aufweist. Die Rollen 8 rollen frei auf den jeweils zugeordneten Laufschienen 60a, 60b ab.

Die Rollenführung 7 zum Sichern der Rollen 8 gegen ein seitliches Abtriften quer zur Förderrichtung F enthält eine Kombination aus einem Führungsvorsprung 70a und einer Führungsausnehmung 70b, die übereinander angeordnet sind und miteinander in Führungseingriff stehen. Im dargestellten Ausführungsbeispiel ist der Führungsvorsprung 70a an der Gliederkette 130 und die Führungsausnehmung 70b am Laufträger 6 vorgesehen. Die Ausnehmung 70b wird durch den Abstand zwischen den beiden Laufflächen 60a, 60b gebildet, während der Führungsvorsprung 70a von der Gliederkette 130 über die Rollen 8 nach unten vorsteht und bevorzugt im Bereich der Gelenke 130' vorgesehen ist, wo seine Fertigung relativ einfach gelöst werden kann. Im dargestellten Ausführungsbeispiel ist an jedem Glied 130a, 130b, 130c jeweils ein Führungsvorsprung 70a vorgesehen, es ist jedoch auch möglich, nur ausgewählte Glieder mit dem Führungsvorsprung 70a zu versehen.

In Abwandlung der beschriebenen und gezeichneten Ausführungsbeispiele kann die erfindungsgemäße Ausgestaltung bei Bandförderern und Transportbändern aller Art eingesetzt werden. So können beispielsweise pro Bandförderer nur eine Rollenreihe oder mehr als zwei Reihen eingesetzt werden. Auch die Konstruktion des Bandkörpers kann abweichend gelöst werden. Schließlich können die Durchmesser der Rollen und deren Abstände je nach Förderaufgabe ausgewählt werden. Die Rückführung des Transportbandes kann beliebig ausgeführt sein. Die Bandführung kann auch einen Vorsprung am Laufträger mit einer Ausnehmung am Band aufweisen.

## Patentansprüche

1. Bandförderer mit einem Bandkörper (2), der mit wenigstens einem Laufträger (6) und einem auf dem Laufträger (6) laufenden Transportband (3, 31, 130) versehen ist, wobei der Laufträger (6) eine Rollenführung (7) enthält, und wobei zwischen dem Laufträger (6) und dem Transportband (3, 31, 130) eine Mehrzahl in Förderrichtung (F) hintereinander liegender Rollen (8, 8') vorgesehen ist, und die Rollenführung (7) als Rollengehäuse (7a, 7b) mit einem U-förmigen Querschnitt ausgebildet ist, in dessen Innenraum die Rollen drehbar gelagert sind,
**dadurch gekennzeichnet, dass**
der Laufträger (6) an einer Übergabestelle (U') zu einem weiteren Bandförderer (1a, 1b) mit einer Gleitschiene (10) versehen ist, auf der das Transportband (3, 31) läuft, wobei die Gleitschiene (10) im Bereich der Übergabestelle (U') die Rollen (8, 8') ersetzt.

2. Bandförderer nach Anspruch 1, **dadurch gekennzeichnet, dass** die Rollen (8, 8') am Laufträger (6) gelagert sind

3. Bandförderer nach Anspruch 1 oder 2, **dadurch gekennzeichnet, dass** bei Verwendung einer Gliederbandkette als Transportband (3, 31) der Abstand zwischen den Rollen (8, 8') so bemessen ist, dass jedes Glied (3a, 3b, 3c) der Gliederbandkette in Transportstellung auf wenigstens zwei Rollen (8, 8') aufliegt.

4. Bandförderer nach Anspruch 1 bis 3, wobei die Gleitschiene (10) mit einer Verschleißleiste versehen ist.

5. Bandförderer nach einem der Ansprüche 1 bis 4, wobei der Laufträger (6) zwei Rollengehäuse (7a, 7b) aufweist, die im Abstand und parallel zueinander angeordnet sind.

6. Bandförderer nach einem der Ansprüche 1 bis 5, **dadurch gekennzeichnet, dass** die Rollen (8, 8') so eng benachbart zueinander angeordnet sind, wie dies möglich ist, ohne dass sich die Rollen gegenseitig berühren.

## Claims

1. Belt conveyor with a belt body (2) that is provided with at least one running support (6) and a conveyor belt (3, 31, 130) that runs on the running support (6), wherein the running support (6) contains a roller guide (7), and wherein a plurality of rollers (8, 8') are positioned one behind the other in the conveying direction (F) between the running support (6) and the conveyor belt (3, 31, 130), and the roller guide (7) is formed as a roller housing (7a, 7b) with a U-shaped cross-section, in the interior of which the rollers are held in such a manner that they can rotate,
**characterized in that**
at a transfer point (U') to a further belt conveyor unit (1a, 1b), the running support (6) is provided with a sliding rail (10) on which the conveyor belt (3, 31) runs, wherein the sliding rail (10) replaces the rollers (8, 8') in the region of the transfer point (U').

2. Belt conveyor according to Claim 1, **characterised in that** the rollers (8, 8') are held on the running support (6).

3. Belt conveyor according to Claim 1 or 2, **characterised in that** when a link conveyor chain is used as the conveyor belt (3, 31), the distance between the rollers (8, 8') is dimensioned in such a way that each link (3a, 3b, 3c) of the link conveyor chain lies on at least two rollers (8, 8') in the transport position.

4. Belt conveyor according to one of the Claims 1 to 3, wherein the sliding rail (10) is provided with a wear strip.

5. Belt conveyor according to one of Claims 1 to 4, wherein the running support (6) has two roller housings (7a, 7b) that are arranged at a distance from each other and parallel to each other.

6. Belt conveyor according to one of the Claims 1 to 5, **characterised in that** the rollers (8, 8') are arranged tightly spaced adjacent to one another, as it is possible, without the rollers touching each other.

## Revendications

1. Transporteur à bande comprenant un corps de transporteur à bande (2), qui est doté d'au moins un support de circulation (6) et d'une bande transporteuse (3, 31, 130) circulant sur le support de circulation (6), transporteur à bande
dans lequel le support de circulation (6) renferme un guidage à galets (7), et
dans lequel entre le support de circulation (6) et la bande transporteuse (3, 31, 130), sont prévus une pluralité de galets (8, 8') placés les uns à la suite des autres dans la direction de transport (F), et le guidage à galets (7) est réalisé sous la forme d'un carter à galets (7a, 7b) avec une section transversale en forme de U, dans l'espace intérieur duquel les galets sont montés en rotation,
**caractérisé en ce que** le support de circulation (6) est équipé, au niveau d'une zone de transfert (U') à un autre transporteur à bande (1a, 1b), d'un rail de glissement (10) sur lequel circule la bande transporteuse (3, 31), le rail de glissement (10) remplaçant les galets (8, 8') dans la région de la zone de transfert (U').

2. Transporteur à bande selon la revendication 1, **caractérisé en ce que** les galets (8, 8') sont montés sur palier dans le support de circulation (6).

3. Transporteur à bande selon la revendication 1 ou la revendication 2, **caractérisé en ce que** dans le cas de l'utilisation d'une bande articulée à chaînons en guise de bande transporteuse (3, 31), la distance entre les galets (8, 8') est dimensionnée de manière telle, que chaque chaînon (3a, 3b, 3c) de la bande articulée à chaînons, repose, dans la position de transport, sur au moins deux galets (8, 8').

4. Transporteur à bande selon les revendications 1 à 3, dans lequel le rail de glissement (10) est doté d'une glissière d'usure.

5. Transporteur à bande selon l'une des revendications 1 à 4, dans lequel le support de circulation (6) comprend deux boitiers de galets (7a, 7b), qui sont agencés à distance l'un de l'autre et parallèlement l'un à l'autre.

6. Transporteur à bande selon l'une des revendications 1 à 5, **caractérisé en ce que** les galets (8, 8') sont agencés de manière aussi rapprochée que possible les uns des autres, sans que les galets se touchent mutuellement.
